# EUROPEAN PATENT APPLICATION

(11) **EP 4 842 037 A1**
(43) Date of publication of application: **18.11.2026**
(21) Application number: 24915954.2
(22) Date of filing: 09.01.2024
(51) Int. Cl.: H04W 24/02

(54) **METHOD FOR SENDING CONFIGURATION INFORMATION, METHOD FOR RECEIVING CONFIGURATION INFORMATION, TERMINALS, APPARATUS, SYSTEM AND STORAGE MEDIUM**

(71) Applicant: Beijing Xiaomi Mobile Software Co., Ltd., Beijing 100085 (CN)
(72) Inventor: YANG, Xing, Beijing 100085 (CN)
(74) Representative: Hersina, Günter
(86) International application number: PCT/CN2024/071464
(87) International publication number: WO 2025/147873

(57) **Abstract**

The present disclosure relates to a method for sending configuration information, a method for receiving configuration information, terminals, apparatus, a system and a storage medium. The method for receiving configuration information comprises: receiving configuration information sent by a network device, the configuration information being used for indicating, when a serving cell of a terminal changes from a first cell to a second cell, whether the terminal deletes a stored model or data, and the network device corresponding to the first cell or the second cell. In the method of present disclosure, the terminal receives the configuration information to acquire a data processing mode indicated by the network device, such that when the serving cell changes, the terminal can process the stored data or model on the basis of the configuration information, thus saving the storage space, or facilitating subsequent repeated utilization of the data.

## Description

### TECHNICAL FIELD

The present disclosure relates to a field of communication technology, and specifically to a method for receiving configuration information, a method for sending configuration information, a terminal, a device, a system, and a storage medium.

### BACKGROUND

Artificial Intelligence (AI) technology can be applied to various technical fields. Machine learning algorithms are among the most important implementation methods of AI, which can obtain models through extensive training data and use these models to predict events for accurate predicting results. In wireless communication networks, AI technology can be employed for prediction and inference to enhance communication system performance.

### SUMMARY

In wireless communication systems utilizing AI technology, terminals may collect or save large amounts of data, necessitating solutions for handling this data.

Embodiments of the present disclosure provide a method for receiving configuration information, a method for sending configuration information, a terminal, a device, a system, and a storage medium.

In a first aspect, embodiments of the present disclosure provide a method for receiving configuration information, performed by a terminal, including:
receiving configuration information sent by a network device, wherein the configuration information indicates whether the terminal deletes a stored model or stored data in a case that a serving cell of the terminal changes from a first cell to a second cell, and the network device corresponds to the first cell or the second cell.

In a second aspect, embodiments of the present disclosure provide a method for sending configuration information, performed by a network device, including:
sending configuration information to a terminal, wherein the configuration information indicates whether the terminal deletes a stored model or stored data in a case that a serving cell of the terminal changes from a first cell to a second cell, and the network device corresponds to the first cell or the second cell.

In a third aspect, embodiments of the present disclosure provide a terminal, including:
a transceiver module, configured to receive configuration information sent by a network device, wherein the configuration information indicates whether the terminal deletes a stored model or stored data in a case that a serving cell of the terminal changes from a first cell to a second cell, and the network device corresponds to the first cell or the second cell.

In a fourth aspect, embodiments of the present disclosure provide a network device, including:
a transceiver module, configured to send configuration information to a terminal, wherein the configuration information indicates whether the terminal deletes a stored model or stored data in a case that a serving cell of the terminal changes from a first cell to a second cell, and the network device corresponds to the first cell or the second cell.

In a fifth aspect, embodiments of the present disclosure provide a terminal, including:
one or more processors;
wherein, the terminal is configured to perform the method described in the first aspect.

In a sixth aspect, embodiments of the present disclosure provide a network device, including:
one or more processors;
wherein, the network device is configured to perform the method described in the second aspect.

In a seventh aspect, embodiments of the present disclosure provide a communication system, including a terminal and a network device, wherein
the terminal is configured to implement the method described in the first aspect;
the network device is configured to implement the method described in the second aspect.

In an eighth aspect, embodiments of the present disclosure provide a storage medium. The storage medium stores instructions, wherein
when the instructions are running on a communication device, the communication device is caused to perform the method described in the first aspect or the second aspect.

In embodiments of the present disclosure, the terminal receives the configuration information to obtain the data processing mode indicated by the network device, so that when there is a change in the serving cell, the terminal can process the stored data or model based on the configuration information, saving storage space or facilitating subsequent reuse of data.

### BRIEF DESCRIPTION OF THE DRAWINGS

In order to provide a clearer explanation of the technical solution in the embodiments of the present disclosure, the following drawings are introduced to describe the embodiments. The following drawings are only some embodiments of this disclosure and do not impose specific limitations on the scope of protection of this disclosure.
FIG. 1 is a schematic diagram of an architecture of a communication system according to an embodiment of the present disclosure.
FIG. 2a to FIG. 2b are schematic diagrams illustrating interaction in a method provided according to embodiments of the present disclosure.
FIG. 3a to FIG. 3c are schematic flowcharts of a method provided according to embodiments of the present disclosure.
FIG. 4a to FIG. 4b are schematic flowcharts of a method provided according to embodiments of the present disclosure.
FIG. 5a is a block diagram of a terminal according to an embodiment of the present disclosure.
FIG. 5b is a block diagram of a network device according to an embodiment of the present disclosure.
FIG. 6a is a block diagram of a communication device according to embodiments of the present disclosure.
FIG. 6b is a block diagram of a communication device according to embodiments of the present disclosure.

### DETAILED DESCRIPTION

Embodiments of the present disclosure provide a method for receiving configuration information, a method for sending configuration information, a terminal, a device, a system and a storage medium.

In a first aspect, embodiments of the present disclosure provide a method for receiving configuration information, performed by a terminal, including:
receiving configuration information sent by a network device, wherein the configuration information indicates whether the terminal deletes a stored model or stored data in a case that a serving cell of the terminal changes from a first cell to a second cell, and the network device corresponds to the first cell or the second cell.

In the above embodiments, the terminal receives the configuration information to obtain the data processing mode indicated by the network device, so that when there is a change in the serving cell, the terminal can process the stored data or model based on the configuration information, saving storage space or facilitating subsequent reuse of data.

In some embodiments of the first aspect, the configuration information includes an area, and the method further includes:
determining, by the terminal, whether to delete the model or the data according to whether the first cell or the second cell is in the area.

In the above embodiments, the terminal measures whether the serving cell belongs to the area indicated by the network device, so as to timely delete models or data that are no longer applicable, improving storage space; or, retain effective or applicable models or data, to improve the efficiency of utilizing data.

In some embodiments of the first aspect, the area is represented by a cell list, or by a geographic location range.

In the above embodiments, the area can be indicated in different ways to enhance the flexibility of the terminal in measuring the serving cell.

In some embodiments of the first aspect, the method further includes:
in a case that the terminal leaves a radio resource control (RRC) connected state, storing the configuration information,
wherein the configuration information is sent via an RRC release message or an RRC reconfiguration message.

In the above embodiments, the terminal can store the configuration information in a timely manner, so that even after leaving the RRC connected state, it can still effectively determine whether data needs to be saved based on the configuration information, improving the timeliness of data processing.

In some embodiments of the first aspect, the configuration information includes an indicator bit to indicate whether to delete.

In the above embodiments, the configuration information sent by the network device can be explicitly indicated to the terminal to save or delete the model or data through the indicator bit, so that the terminal can perform corresponding data processing in a timely manner.

In some embodiments of the first aspect, the configuration information includes at least one of:
an artificial intelligence (AI) model;
an AI function;
an AI application scenario; or
an AI application condition;
wherein at least one of the AI model, the AI function, the AI application scenario, or the AI application condition has a corresponding relationship with the data.

In the above embodiments, the terminal can also obtain the AI model, AI function, AI application scenario, or AI application condition directly related to processing data based on the configuration information, thereby clearly indicating which part of data the terminal should process.

In some embodiments of the first aspect, the method further includes:
saving, by the terminal, the model or the data corresponding to the configuration information, or deleting, by the terminal, the model or the data corresponding to the configuration information.

In the above embodiments, the terminal processes the specific model or data based on indication of the configuration information, so that relevant data can be deleted or saved in a timely manner, facilitating the saving of storage space without applying the model application.

In some embodiments of the first aspect, the configuration information includes at least one of:
an AI model supported by the first cell or the second cell;
an AI function supported by the first cell or the second cell; or
data collection information.

In the above embodiments, the configuration information can implicitly indicate the data processing mode to the terminal by configuring the above information.

In some embodiments of the first aspect, the method further includes:
in a case that the configuration information includes the data collection information, saving, by the terminal, the model or the data; or
in a case that the configuration information includes the supported AI model or the supported AI function, saving, by the terminal, the model or the data corresponding to the supported AI model or the supported AI function.

In the above embodiments, the terminal will timely save the required data based on the content of the configuration information, in order to apply the relevant model or function reasonably.

In some embodiments of the first aspect, the configuration information is sent via system information (SI).

In the above embodiments, the terminal can obtain the configuration information contained in the SI while monitoring the SI, so as to timely obtain the data processing mode.

In some embodiments of the first aspect, the data is used in a training stage of an AI model.

In the above embodiments, the data deleted or saved by the terminal is used for the training stage, so that when the serving cell changes, the terminal can process the training data in a timely manner, such as deleting inappropriate training data to save space, or saving applicable data to save the data collection process.

In some embodiments of the first aspect, a change of the serving cell is determined according to a cell reselection or cell handover.

In the above embodiments, the terminal can determine whether the serving cell has changed based on cell reselection or cell switching, so that the model or data can be saved or deleted in a timely manner.

In a second aspect, embodiments of the present disclosure provide a method for sending configuration information, performed by a network device, including:
sending configuration information to a terminal, wherein the configuration information indicates whether the terminal deletes a stored model or stored data in a case that a serving cell of the terminal changes from a first cell to a second cell, and the network device corresponds to the first cell or the second cell.

In some embodiments of the second aspect, the configuration information includes an area.

In some embodiments of the second aspect, the area is represented by a cell list, or by a geographic location range.

In some embodiments of the second aspect, the configuration information is sent via a radio resource control (RRC) release message or an RRC reconfiguration message.

In some embodiments of the second aspect, the configuration information includes an indicator bit to indicate whether to delete.

In some embodiments of the second aspect, the configuration information includes at least one of:
an artificial intelligence (AI) model;
an AI function;
an AI application scenario; or
an AI application condition;
wherein at least one of the AI model, the AI function, the AI application scenario, or the AI application condition has a corresponding relationship with the data.

In some embodiments of the second aspect, the configuration information includes at least one of:
an AI model supported by the first cell or the second cell;
an AI function supported by the first cell or the second cell; or
data collection information.

In some embodiments of the second aspect, the configuration information is sent via system information (SI).

In some embodiments of the second aspect, the data is used in a training stage of an AI model.

In some embodiments of the second aspect, a change of the serving cell is determined according to a cell reselection or cell handover.

In a third aspect, embodiments of the present disclosure provide a terminal, including:
a transceiver module, configured to receive configuration information sent by a network device, wherein the configuration information indicates whether the terminal deletes a stored model or stored data in a case that a serving cell of the terminal changes from a first cell to a second cell, and the network device corresponds to the first cell or the second cell.

In a fourth aspect, embodiments of the present disclosure provide a network device, including:
a transceiver module, configured to send configuration information to a terminal, wherein the configuration information indicates whether the terminal deletes a stored model or stored data in a case that a serving cell of the terminal changes from a first cell to a second cell, and the network device corresponds to the first cell or the second cell.

In a fifth aspect, embodiments of the present disclosure provide a terminal, including:
one or more processors;
wherein, the terminal is configured to perform the method described in the first aspect.

In a sixth aspect, embodiments of the present disclosure provide a network device, including:
one or more processors;
wherein, the network device is configured to perform the method described in the second aspect.

In a seventh aspect, embodiments of the present disclosure provide a communication system, including a terminal and a network device, wherein
the terminal is configured to implement the method described in the first aspect;
the network device is configured to implement the method described in the second aspect.

In an eighth aspect, embodiments of the present disclosure provide a storage medium. The storage medium stores instructions, wherein
when the instructions are running on a communication device, the communication device is caused to perform the method described in the first aspect or the second aspect.

In a ninth aspect, embodiments of the present disclosure provide a program product that, when executed by a communication device, causes the communication device to perform the method described in optional implementations of the first aspect, or the second aspect.

In a tenth aspect, embodiments of the present disclosure provide a computer program that, when running on a computer, causes the computer to perform the method described in optional implementations of the first aspect, or the second aspect.

In an eleventh aspect, embodiments of the present disclosure provide a chip or a chip system, including a processing circuit, configured to perform the method described in optional implementations of the first aspect, or the second aspect.

It may be understood that the terminal, the network device, the communication system, the storage medium, the program product, the computer program and the chip or chip system are all configured to perform the methods in the embodiments of the present disclosure. Therefore, for achievable beneficial effects, reference may be made to the beneficial effects in the corresponding method, which are not repeated here.

Embodiments of the present disclosure are not exhaustive and only serve as illustrations of some embodiments, but not as specific limitations on the protection scope of the present disclosure. When there is no contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined, and an embodiment may be arbitrarily combined with optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in embodiments of the present disclosure are for a purpose of describing specific embodiments only and are not intended to limit the present disclosure.

In embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In the embodiments of the present disclosure, "a plurality of" means two or more.

In some embodiments, the terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the present disclosure, depending on situations, may include at least one of the following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on situations, may include the following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and the device, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, "network" may be interpreted as a device (e.g., access network device, core network device, etc.) included in the network.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc. may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. may be used interchangeably.

In some embodiments, the acquisition of data, information, etc. may comply with laws and regulations of the country to which the data is obtained.

In some embodiments, data, information, etc. may be obtained with consent from users.

In addition, each element, each row, or each column in the table of embodiments of the disclosure may be implemented as an independent embodiment, and the combination of any elements, any rows, or any columns may also be implemented as an independent embodiment.

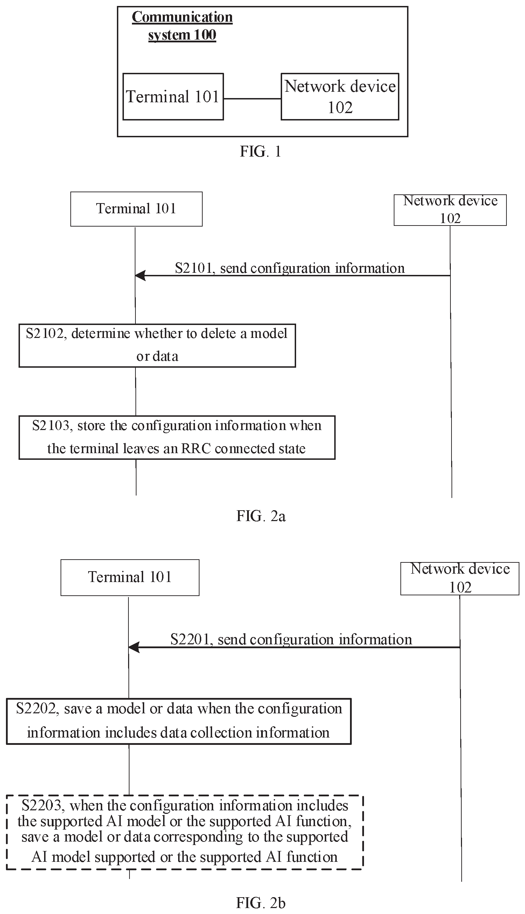

FIG. 1 is a schematic diagram of an architecture of a communication system according to an embodiment of the present disclosure.

As shown in FIG. 1, a communication system 100 includes a terminal 101 and a network device 102.

In some embodiments, the terminal 101 includes, for example, at least one of a mobile phone, a wearable device, an Internet of Things device, or a car, a smart car, and a Pad, with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the network device 102 may include at least one of an access network device or a core network device.

In some embodiments, the access network device is, for example, a node or device that connects the terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, or an access node in a wireless fidelity (Wi-Fi) system, which is not limited herein.

In some embodiments, the technical solution of the embodiments of the present disclosure can be applied to the Open-RAN architecture. In this case, the interfaces between or within network devices involved in the embodiments of the present disclosure can become internal interfaces of the Open-RAN, and the flow and information exchange between these internal interfaces can be implemented through software or programs.

In some embodiments, the access network device may be composed of a central unit (CU) and distributed units (DUs), where CU may also be described as a control unit. The CU-DU structure can be used to split the protocol layer of the network device, with some protocol layer functions centrally controlled by CU and the remaining or all protocol layer functions distributed in DUs, which are centrally controlled by CU, but not limited to this.

In some embodiments, the core network device may be a device, including one or more network elements, or may be a plurality of devices or a device group, each including all or part of one or more network elements. The network element may be virtual or physical. The network device includes, for example, at least one of an evolved packet core (EPC), a 5G core network (5GCN), or a next generation core (NGC). Alternatively, the core network device refers to a network element with a specific function, such as Access Management Function (AMF), Service Management Function (SMF), etc.

It may be understood that the communication system described in the embodiments of the disclosure aims to more clearly illustrate the technical solutions of the embodiments of the disclosure, and does not constitute a limitation on the technical solutions provided in the embodiments of the disclosure. A person skilled in the art may know that with the evolution of the system architecture and the emergence of new service scenarios, the technical solution provided in the embodiments of the disclosure are also applicable to similar technical problems.

The following embodiments of the present disclosure may be applied to the communication system 100 shown in FIG. 1, or to some entities, but are not limited thereto.

Entities in FIG. 1 are illustrative. The communication system may include all or some of the entities in FIG. 1, or may include other entities not shown in FIG. 1. The entities may be in any number and in any form. Each entity may be physical or virtual. Connection relationships between the entities are illustrative. The entities may be unconnected or may be connected. They may be connected in any manner, for example, they may be directly connected or indirectly connected, or may be connected via a wired or wireless way.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, a combination of a plurality of systems (e.g., a combination of LTE or LTE-A with 5G) may also be applied.

In embodiments of the present disclosure, in an AI based wireless communication system, training of an AI model requires collection of a large amount of data. For the terminal 101, when moving from one cell to another, if there is still data related to the original cell, it is necessary to solve the problem of how to handle this part of data.

FIG. 2a is a schematic diagram illustrating interaction in a method for sending and receiving configuration information according to an embodiment of the present disclosure. As shown in FIG. 2a, this embodiment of the present disclosure relates to a method for sending and receiving configuration information, and includes the following steps.

At step S2101, a network device 102 sends configuration information to a terminal 101.

Optionally, the network device 102 may be a network device corresponding to a serving cell where the terminal 101 is located.

In an example, when the serving cell changes, the source serving cell before the change is called the first cell, and the target serving cell after the change is called the second cell. The network device 102 may be a network device corresponding to the first cell or a network device corresponding to the second cell. Optionally, the first and second cells are only used to distinguish the serving cells before and after the change, without limiting specific cells.

In this example, in a case where the network device 102 corresponds to the first cell, the network device 102 sends the above configuration information before the terminal 101 switches to the second cell. In a case where the network device 102 corresponds to the second cell, the network device 102 sends the above configuration information after the terminal 101 switches to the second cell.

Optionally, the configuration information indicates whether the terminal 101 deletes a stored model or stored data when the serving cell of the terminal changes from the first cell to the second cell. Whether the terminal 101 deletes the stored model or data includes: deleting the stored model or data, or continuing to save the stored model or data. Furthermore, whether terminal 101 deletes the stored model or data includes at least one of: the terminal 101 saving the stored model, the terminal 101 saving the stored data, the terminal 101 deleting the stored model, or the terminal 101 deleting the stored data.

In some embodiments, the stored model may be an AI technology-based model or simply an AI model.

In some embodiments, the stored data is used for a training stage of the AI model. The stored data may be obtained before switching to the second cell. For example, the stored data was obtained and stored under the coverage of the first cell.

In an example, the configuration information may indicate the terminal 101 to save or delete all the stored data.

In another example, the configuration information indicates that data to be saved or deleted has a binding or mapping relationship with an AI model, an AI function, an AI application scenario, or an AI application condition, as described in the following embodiments.

In some embodiments, the configuration information includes at least one of:
an AI model;
an AI function;
an AI application scenario; or
an AI application condition;
wherein at least one of the AI model, the AI function, the AI application scenario, or the AI application condition has a corresponding relationship with the data.

Optionally, the AI model, the AI function, the AI application scenario, or the AI application condition may be distinguished using the corresponding identifier. The configuration information may include the corresponding identifier, to indicate the terminal 101 to process the stored data associated with the identifier.

Optionally, there is a correlation between the AI model and the AI function. For example, an AI function is a collection of AI models that can be used for a specific function.

Optionally, there is a correlation between the AI model and the AI application scenario. For example, the AI application scenario includes one or more AI models, or the AI application includes one or more AI functions.

Optionally, the association or correspondence between the AI model, the AI function, and the AI application scenario may be configured by the network device 102 or determined by the terminal 101 and reported to the network device 102.

Optionally, the AI application scenario may include at least one of the following mobile communication system processes: beam management, beam measurement, Channel State Information (CSI) reporting, CSI compression, positioning, handover, mobility management, or radio resource management.

In the AI based beam management process, the terminal 101 can reduce the number of measured beams, and the terminal 101 or the network device 102 can use AI inference to obtain the optimal beam. Beam prediction in beam management includes spatial domain beam prediction and time domain beam prediction. In spatial domain beam prediction, the terminal 101 measures a small number of beams and predicts the measurement results of other beams. In time domain beam prediction, the terminal 101 predicts future beam measurement results based on historical beam measurement results.

In the AI based CSI reporting process, the terminal 101 can perform AI model-based CSI compression, compress CSI measurement results through AI, and report the compressed CSI measurement results to the network device 102. After receiving the CSI measurement results, the network device 102 uses the AI model to restore the original CSI measurement results. The AI based CSI reporting process reduces the number of signaling bits required during the reporting process. The network device 102 can also predict future CSI based on the historical CSI measurement results reported by the terminal 101.

In the AI based positioning process, the terminal 101 can predict the precise location based on limited measurement results.

In the AI based mobility process, the terminal 101 can predict the target cell for handover or mobility event.

Optionally, the training stage of the AI model requires the collection of a large amount of data, which varies depending on different application scenarios.

In some examples, the terminal determines whether to delete data for model training, which has different meanings in different application scenarios.

For example, in the AI application scenario of beam management, the data or the data for the training stage may include at least one of beam measurement results, beam identification, the strongest K beam measurement results and beam identification, or the time of obtaining the beam measurement results; wherein, the measured beam can be configured by the network.

For another example, in the AI application scenario of CSI compression, the data or the data for the training stage may include CSI measurement results and the time of obtaining the CSI measurement results.

For another example, in the AI application scenario of positioning, the data or the data for the training stage may include channel impulse response measurement results, location information of the terminal 101, and measurement results of Positioning Reference Signal (PRS).

For another example, in the AI application scenario of mobility management, the data or the data for the training stage may include at least one of measurement results of the serving cell, measurement results of the target cell, time, location of the terminal 101, source cell, target cell, etc.

Optionally, if the training of the AI model is on the network side, the terminal 101 needs to report the collected data to the network device 102. To avoid frequent reporting of collected data, the terminal 101 can store data collected in multiple times locally and report all stored data to the network device 102 in one report.

Optionally, the AI model or AI function can achieve good performance under the specific AI application condition. The AI application condition may include a condition on the network side and a condition on the terminal side.

The condition on the terminal side may include at least one of:
a speed of the terminal;
a battery level of the terminal;
an operating power of the terminal;
a computing capability of the terminal, such as floating point operations per second (FLOPs);
a location of the terminal, which may be a geographical location or a location within the cell;
a business type, such as audio, video, multimedia, voice, etc.;
antenna configuration, including a number of ports; or
a rotation speed.

The condition on the network side may include at least one of:
a cell type, such as macro, micro, or dense urban;
a network deployment scenario, such as indoor or outdoor;
a radio channel quality, which may be determined by Reference Signal Received Power (RSRP), Reference Signal Received Quality (RSRQ), or Signal to Interference plus Noise Ratio (SINR);
a frequency where the cell is at;
a location of the cell;
a distance between base stations;
antenna configuration, including the number of ports and the number of multiple input multiple output (MIMO) layers;
transmission power;
parameter set (Numerology), including subcarrier spacing.

In an example, when a certain AI model, AI function, AI application scenario, or AI application condition is included in the configuration information, if any of the corresponding identifiers are included, the terminal 101 saves the stored model or data corresponding to the configuration information, that is, the model or data associated with the identifier; or, deletes the stored model or data corresponding to the configuration information, that is, the model or data associated with the identifier.

In this example, network device 102 may send the configuration information through SI. For example, the terminal 101 obtains the configuration information by reading the system information of the changed serving cell, which is the second cell.

In some embodiments, the configuration information includes an indicator bit for indicating whether to delete.

Optionally, the indicator bit may occupy 1 bit.

For example, when the value of the 1 bit is 1, it indicates that terminal 101 saves the stored model or data; or, when the configuration information indicates the identifier of a certain model, function, application scenario or application condition, the value of the 1 bit indicates that the terminal 101 saves the stored model or data associated with the identifier.

For another example, when the value of this 1 bit is 0, it indicates that the terminal 101 deletes the stored model or data; or, when the configuration information indicates the identifier of a certain model, function, application scenario or application condition, the value of the 1 bit is 0, indicating that the terminal 101 deletes the stored model or data associated with the identifier.

In some embodiments, the terminal 101 receives the configuration information.

At step S2102, the terminal 101 determines whether to delete the model or data.

Optionally, step S2102 may be executed when the serving cell where the terminal 101 is located changes, such as when the serving cell changes from the first cell to the second cell.

Optionally, the change of the serving cell is determined based on cell reselection or cell handover. For example, after the terminal 101 performs cell reselection, the serving cell will change. Alternatively, after the terminal 101 performs cell handover, the serving cell will change.

In some embodiments, if the configuration information includes the above-mentioned indicator bit, the terminal 101 can determine whether to save or delete the stored data based on the value of the indicator bit. For example, when the value of the indicator bit is 1, the terminal 101 saves the stored model or data. For another example, when the value of the indicator bit is 0, the terminal 101 deletes the stored model or data.

In some embodiments, the configuration information may include a model, a function, an application scenario, or an application condition, such as an identifier of at least one of them. Optionally, the terminal may delete the model or data corresponding to the configuration information, or save the model or data corresponding to the configuration information.

In an example, the terminal 101 saves the data associated with this identifier, while the terminal 101 can delete other data.

In another example, the terminal 101 can save or delete the stored model or data associated with the identifier based on the value of the indicator bit. For example, when the configuration information indicates the identifier of a certain model, function, application scenario or application condition, the terminal 101 saves the stored model or data associated with the identifier when the value of the indicator bit is 1. For another example, when the configuration information indicates the identifier of a certain model, function, application scenario or application condition, the terminal 101 deletes the stored model or data associated with the identifier when the value of the indicator bit is 0.

In some embodiments, the configuration information include an area, and step S2102 may include the following step S2102-1.

At step S2102-1, the terminal determines whether to delete the model or data according to whether the first cell or the second cell is within the area.

Optionally, the name of the area is for illustrative purposes only, and may also be referred to as a first area, used to indicate a cell range, geographic range, or coordinate range.

Optionally, the area is represented by a cell list, or represented by a geographic location range.

When the reference area is represented by a cell list, the terminal 101 may determine whether to save the model or data based on whether the serving cell belongs to the cell list. For example, if the serving cell belongs to the cell list, the terminal 101 saves the stored data; if the serving cell does not belong to the cell list, the terminal 101 deletes the stored data. When the reference area is represented by the geographic location range, the terminal 101 may determine whether to save the model or data based on whether the serving cell belongs to that range. For example, if the serving cell belongs to this range, the terminal 101 saves the stored data; if the serving cell does not belong to this range, the terminal 101 deletes the stored data.

Optionally, when the terminal 101 determines the relationship between the serving cell and the area, the serving cell may be either the first cell or the second cell.

For example, when the area in the configuration information indicates a list of cells with higher priority, the first cell may be judged. If the first cell belongs to the list with higher priority, the training data obtained under its coverage may be saved by the terminal 101. For example, when the area in the configuration information indicates the list of cells or location range that can share training data, the second cell may be judged. If the second cell belongs to the cell list or location range, it indicates that the second cell may use the stored data, and the terminal 101 may save the stored data.

For another example, if the terminal 101 determines that the first cell belongs to the area indicated by the network device 102, the terminal 101 needs to save the stored data or model under that first cell.

Optionally, the reference area is represented by a cell list, or by a geographic location range.

At step S2103, when the terminal leaves an RRC connected state, the terminal stores the configuration information.

Optionally, the terminal leaving the connected state may also be referred to as exiting the connected state, such as disconnecting from the first cell or being in an RRC inactive state in the second cell.

Optionally, the configuration information may be sent through a Radio Resource Control (RRC) release message or an RRC reconfiguration message.

Optionally, if the configuration information includes the area and is carried in an RRC release message or RRC reconfiguration message, the terminal 101 needs to store the configuration information containing the reference area when leaving the connected state, so that the terminal 101 can make the judgment in step S2102 based on the area.

In some embodiments, names of information and other elements are not limited to those specified in the embodiments. The terms such as "information", "message", "signal", "signaling", "report", "configuration", "indication", "instruction", "command", "channel", "parameter", "domain", "field", etc., may be used interchangeably.

In some embodiments, the terms such as "acquire", "obtain", "get", "receive", "transmit", "bidirectional transmission", "send and/or receive" may be used interchangeably, and they may be interpreted as receiving from another entity, obtaining from a protocol, obtaining via processing by itself, autonomously implementing, and other meanings.

In some embodiments, the terms such as "send", "report", "deliver", "transmit", "bidirectional transmission", "send and/or receive" may be used interchangeably.

In some embodiments, the terms such as "radio", "wireless", "radio access network (RAN)", "access network (AN)", "RAN-based", etc. may be used interchangeably.

In some embodiments, terms such as 'time', 'time point', 'moment', 'time position', etc. may be interchangeable with each other, and terms such as 'duration', 'time period', 'time window', 'window', 'time', etc. may be interchangeable with each other.

In some embodiments, terms such as 'component carrier (CC)', 'cell', 'frequency carrier', 'carrier frequency', etc. may be interchangeable with each other.

In some embodiments, the terms such as "certain", "predetermined", "preset", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited herein.

In some embodiments, determination or judgment may be performed using a value represented by 1 bit (0 or 1), or using boolean values represented by true or false, or by numerical comparison (e.g., comparison with a predetermined value), which is not limited herein.

In some embodiments, "not expecting to receive" may be interpreted as not receiving on time domain and/or frequency domain resources, or as not performing subsequent processing on received data or the like; 'not expecting to send' may be interpreted as not sending, or as sending but not expecting the recipient to respond to the content being sent.

The method involved in the embodiments of the present disclosure may include at least one of steps S2101-S2103. For example, the method includes step S2101.

In some embodiments, at least one of steps S2102-S2103 is optional, and one or more of these steps may be omitted or replaced in different embodiments.

In some embodiments, reference may be made to other optional implementations described before or after the specification corresponding to FIG. 2a.

FIG. 2b is a schematic diagram illustrating interaction in a method for sending and receiving configuration information according to an embodiment of the present disclosure. As shown in FIG. 2b, this embodiment of the present disclosure relates to a method for sending and receiving configuration information, which includes the following steps.

At step S2201, a network device 102 sends configuration information to a terminal 101.

For optional implementations of S2201, reference may be made to optional implementations of S2101, which will not be repeated here.

In some embodiments, the configuration information includes at least one of:
an AI model supported by the first cell or the second cell;
an AI function supported by the first cell or the second cell; or
data collection information.

Optionally, the AI model or AI function supported by the serving cell belongs to AI configuration. The AI configuration may also indicate whether the serving cell supports AI functionality.

Optionally, the data collection information may include a type of data collection, a period, and a condition that triggers data collection.

The AI model or AI function supported by the first cell may be the same or different from that supported by the second cell.

Optionally, the network device 102 may send the configuration information through SI, such as through a System Information Block (SIB).

In some embodiments, the terminal 101 receives the configuration information.

At step S2202, when the configuration information includes the data collection information, the terminal 101 saves the model or data.

In some embodiments, based on the data collection information in the configuration information, it may implicitly indicate that the terminal 101 needs to save the stored model or stored data.

At step S2203, when the configuration information includes the supported AI model or the supported AI function, the terminal 101 saves the model or data corresponding to the supported AI model or the supported AI function.

Optionally, the serving cell may be the serving cell before or after the change, that is, the first cell or the second cell.

For example, taking the second cell as an example, if the configuration information indicates the AI model or AI function supported by the second cell, the terminal 101 may only save the model or data corresponding to the AI model or AI function supported by the second cell, and other models or data may be deleted.

In some embodiments, based on the content of configuration information, the terminal 101 saves specific stored models or data, while other data can be deleted to save space.

The method involved in the embodiments of the present disclosure may include at least one of steps S2201 to S2203. For example, the method includes step S2201.

In some embodiments, steps S2202 and S2203 are parallel schemes, and one of them can be executed.

In some embodiments, reference may be made to other optional implementations described before or after the specification corresponding to FIG. 2b.

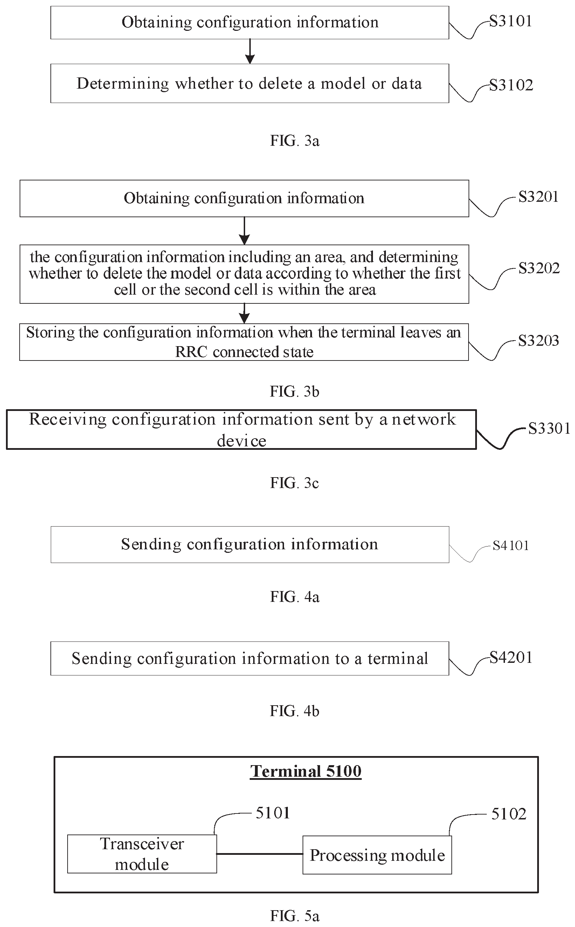

FIG. 3a is a schematic flowchart of a method for sending and receiving configuration information according to an embodiment of the present disclosure. As shown in FIG. 3a, this embodiment of the present disclosure relates to a method for sending and receiving configuration information. The method is performed by the terminal 101 and includes the following steps.

At step S3101, configuration information is obtained.

In some embodiments, for implementations of step S3101, reference can be made to optional implementations of steps S2101 and S2201, which will not be repeated here.

Optionally, the terminal 101 may obtain the configuration information from the network device 102 or other entities.

At step S3102, whether to delete a model or data is determined.

In some embodiments, for implementations of step S3102, reference can be made to optional implementations of steps S2102, which will not be repeated here.

In some embodiments, for implementations of step S3102, reference can be made to optional implementations of step S2202 or S2203, which will not be repeated here.

In some embodiments, reference may be made to other optional implementations described before or after the specification corresponding to FIG. 3a.

FIG. 3b is a schematic flowchart of a method for sending and receiving configuration information according to an embodiment of the present disclosure. As shown in FIG. 3b, this embodiment of the present disclosure relates to a method for sending and receiving configuration information. The method is performed by the terminal 101 and includes the following steps.

At step S3201, configuration information is obtained.

In some embodiments, for implementations of step S3201, reference can be made to optional implementations of steps S2101 and S2201, which will not be repeated here.

At step S3202, the configuration information includes an area, and the terminal 101 determines whether to delete a model or data according to whether the first cell or the second cell is within in the area.

In some embodiments, for implementations of step S3202, reference can be made to optional implementations of steps S2102-1, which will not be repeated here.

At step S3203, when the terminal leaves an RRC connected state, the terminal 101 stores the configuration information.

In some embodiments, for implementations of step S3203, reference can be made to optional implementations of step S2103, which will not be repeated here.

In some embodiments, reference may be made to other optional implementations described before or after the specification corresponding to FIG. 3b.

FIG. 3c is a schematic flowchart of a method for sending and receiving configuration information according to an embodiment of the present disclosure. As shown in FIG. 3c, this embodiment of the present disclosure relates to a method for sending and receiving configuration information. The method is performed by the terminal 101 and includes the following steps.

At step S3301, configuration information sent by a network device is received.

In some embodiments, for implementations of step S3301, reference can be made to optional implementations of steps S2101 and S2201, which will not be repeated here.

Optionally, the configuration information indicates whether the terminal deletes a stored model or stored data in a case that a serving cell of the terminal changes from a first cell to a second cell, and the network device corresponds to the first cell or the second cell.

In some embodiments, the configuration information includes an area, and the method further includes:
determining, by the terminal, whether to delete or save the model or the data according to whether the first cell or the second cell is in the area.

Optionally, the area is represented by a cell list, or by a geographic location range.

Optionally, the method further includes:
in a case that the terminal leaves a radio resource control (RRC) connected state, storing the configuration information,
wherein the configuration information is sent via an RRC release message or an RRC reconfiguration message.

In some embodiments, the configuration information includes an indicator bit to indicate whether to delete.

In some embodiments, the configuration information includes at least one of:
an artificial intelligence (AI) model;
an AI function;
an AI application scenario; or
an AI application condition;
wherein at least one of the AI model, the AI function, the AI application scenario, or the AI application condition has a corresponding relationship with the data.

In some embodiments, when the AI application scenario is beam management, the data includes, for example, beam measurement results and/or beam identification; or
when the AI application scenario is channel state information (CSI) compression, the data includes CSI measurement results, for example; or
when the AI application scenario is mobility management, the data includes, for example, cell measurement results and/or terminal location.

In some embodiments, the method further includes:
saving, by the terminal, the model or the data corresponding to the configuration information, or deleting, by the terminal, the model or the data corresponding to the configuration information.

In some embodiments, the configuration information includes at least one of:
an AI model supported by the first cell or the second cell;
an AI function supported by the first cell or the second cell; or
data collection information.

Optionally, the method further includes:
in a case that the configuration information includes the data collection information, saving, by the terminal, the model or the data; or
in a case that the configuration information includes the supported AI model or the supported AI function, saving, by the terminal, the model or the data corresponding to the supported AI model or the supported AI function.

Optionally, the configuration information is sent via system information (SI).

In some embodiments, the data is used in a training stage of an AI model.

In some embodiments, a change of the serving cell is determined according to a cell reselection or cell handover.

In some embodiments, reference may be made to other optional implementations described before or after the specification corresponding to FIG. 3c.

FIG. 4a is a schematic flowchart of a method for sending and receiving configuration information according to an embodiment of the present disclosure. As shown in FIG. 4a, this embodiment of the present disclosure relates to a method for sending and receiving configuration information. The method is performed by the network device 102 and includes the following steps.

At step S4101, configuration information is sent.

In some embodiments, for implementations of step S4101, reference can be made to optional implementations of steps S2101 and S2201, which will not be repeated here.

Optionally, the network device 102 may send the configuration information to the terminal or other entities.

In some embodiments, reference may be made to other optional implementations described before or after the specification corresponding to FIG. 4a.

FIG. 4b is a schematic flowchart of a method for sending and receiving configuration information according to an embodiment of the present disclosure. As shown in FIG. 4b, this embodiment of the present disclosure relates to a method for sending and receiving configuration information. The method is performed by the network device 102 and includes the following steps.

At step S4201, configuration information is sent to a terminal.

Optionally, the configuration information indicates whether the terminal deletes a stored model or stored data in a case that a serving cell of the terminal changes from a first cell to a second cell, and the network device corresponds to the first cell or the second cell.

In some embodiments, the configuration information includes an area.

Optionally, the area is represented by a cell list, or by a geographic location range.

Optionally, the configuration information is sent via a radio resource control (RRC) release message or an RRC reconfiguration message.

In some embodiments, the configuration information includes an indicator bit to indicate whether to delete.

In some embodiments, the configuration information includes at least one of:
an artificial intelligence (AI) model;
an AI function;
an AI application scenario; or
an AI application condition;
wherein at least one of the AI model, the AI function, the AI application scenario, or the AI application condition has a corresponding relationship with the data.

In some embodiments, when the AI application scenario is beam management, the data includes, for example, beam measurement results and/or beam identification; or
when the AI application scenario is channel state information (CSI) compression, the data includes CSI measurement results, for example; or
when the AI application scenario is mobility management, the data includes, for example, cell measurement results and/or terminal location.

In some embodiments, the configuration information includes at least one of:
an AI model supported by the first cell or the second cell;
an AI function supported by the first cell or the second cell; or
data collection information.

In some embodiments, the configuration information is sent via system information (SI).

In some embodiments, the data is used in a training stage of an AI model.

In some embodiments, a change of the serving cell is determined according to a cell reselection or cell handover.

In some embodiments, reference may be made to other optional implementations described before or after the specification corresponding to FIG. 4b.

Embodiments of the present disclosure provide a method for data storage, which enables UE to reasonably save or release stored data, saving UE storage. For the convenience of understanding the embodiments of the present disclosure, the following are some specific examples.

### Example 1:

When the serving cell of the UE changes, whether to save or delete the stored data is determined based on first configuration.

Optionally, the UE corresponds to the terminal 101 in the aforementioned embodiments; the first configuration corresponds to the configuration information in the aforementioned embodiments.

As an embodiment, the data is used for model training.

As an embodiment, the serving cell change includes cell reselection or handover.

As an embodiment, the stored data is bound to the application scenario, application condition, or model.

### Example 2:

Based on Example 1, UE determines whether to delete or save stored data based on whether the serving cell belongs to the first area.

Optionally, the first area corresponds to the reference area in the aforementioned embodiments.

As an embodiment, the area may be a cell list or a geographic location range.

As an embodiment, the area may be carried in an RRC release message or an RRC reconfiguration message. Optionally, when the UE leaves the connected state, the first area information is stored.

### Example 3:

Based on Example 1, the UE determines whether to delete or save the stored data according to the first indication sent by the serving cell.

Optionally, the first indication corresponds to the implementation of the aforementioned embodiment where the configuration information contains specific content. For example, the first indication corresponds to the indicator bit, or the first indication corresponds to the AI model, AI function, AI application scenario, or AI application condition contained in the configuration information, or the first indication corresponds to the aforementioned AI configuration.

As an embodiment, the first indication may be carried in the system information.

### Example 4:

Based on Example 3, the first indication may be an application scenario, application condition, or model. Optionally, the UE saves data corresponding to the first indication.

As an embodiment, the UE reads the system information of the serving cell after the change, to obtain the first indication.

### Example 5:

Based on Example 3, the first indication may be the AI configuration.

As an embodiment, the AI configuration may be a system information block that carries AI configuration or data collection configuration. Optionally, the AI configuration may be the supported AI model, and the data collection configuration may include the type of data collection, the period, and the condition for triggering data collection.

As an embodiment, the AI configuration may indicate whether the cell supports AI functionality.

Embodiments of the present disclosure also provide an apparatus for implementing any one of the above methods. For example, an apparatus is provided, including units or modules for implementing the steps performed by the terminal in any one of the above methods. For another example, another apparatus is provided, including units or modules for implementing the steps performed by the network device (e.g., access network element, core network function node, core network device, etc.) in any one of the above methods.

It should be understood that the division of units or modules in the above apparatuses is merely a division of logical functions. In actual implementations, the units or modules may be fully or partially integrated into a single physical entity or may be physically separated. In addition, the units or modules in the apparatus may be implemented in the form of software called by a processor. For example, the apparatus includes a processor, which is connected to a memory for storing instructions. The processor calls the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units or modules are realized by designing logical relationships among components in the circuit. For another example, in another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of software called by the processor, or fully implemented in the form of the hardware circuit, or partially implemented in the form of software called by the processor and the remaining part implemented in the form of the hardware circuit.

In embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or modules. In addition, the hardware circuit may be designed specifically for artificial intelligence and may be understood as an ASIC, such as a neural network processing unit (NPU), a tensor processing unit (TPU), or a deep learning processing unit (DPU).

FIG. 5a is a block diagram of a terminal according to embodiments of the present disclosure. As shown in FIG. 5a, the terminal 5100 may include at least one of a transceiver module 5101 or a processing module 5102. In some embodiments, the transceiver module 5101 is configured to receive configuration information sent by a network device, wherein the configuration information indicates whether the terminal deletes a stored model or stored data in a case that a serving cell of the terminal changes from a first cell to a second cell, wherein the network device corresponds to the first cell or the second cell.

Optionally, the transceiver module 5101 is configured to perform at least one of the communication steps such as sending and/or receiving performed by the terminal 101 in any one of the above methods, and will not be repeated here. Optionally, the processing module 5102 is configured to perform at least one of the other steps performed by the terminal 101 in any one of the above methods, and will not be repeated here.

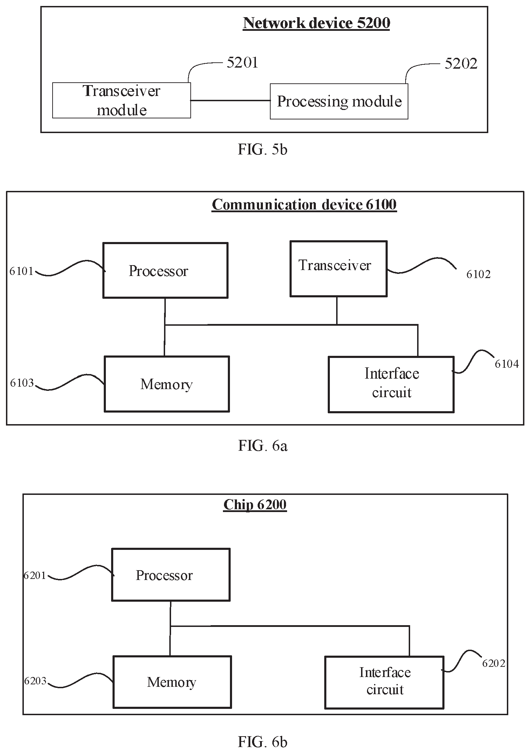

FIG. 5b is a block diagram of a network device according to embodiments of the present disclosure. As shown in FIG. 5b, the network device 5200 may include at least one of a transceiver module 5201 or a processing module 5202. In some embodiments, the transceiver module 5201 is configured to send configuration information to a terminal, wherein the configuration information indicates whether the terminal deletes a stored model or stored data in a case that a serving cell of the terminal changes from a first cell to a second cell, wherein the network device corresponds to the first cell or the second cell.

Optionally, the transceiver module 5201 is configured to perform at least one of the communication steps such as sending and/or receiving performed by the network device 102 in any one of the above methods, and will not be repeated here. Optionally, the processing module 5202 is configured to perform at least one of the other steps performed by the network device 102 in any one of the above methods, and will not be repeated here.

In some embodiments, the transceiver module may include a sending module and/or a receiving module, which may be separate or integrated together. Optionally, the transceiver module may be interchanged with a transceiver.

In some embodiments, the processing module may be a module or may include a plurality of sub-modules. Optionally, the plurality of sub-modules perform all or part of the steps required to be performed by the processing module. Optionally, the processing module may be interchanged with a processor.

FIG. 6a is a block diagram of a communication device 6100 according to embodiments of the present disclosure. The communication device 6100 may be a network device (e.g., an access network device, a core network device, etc.), or a terminal (e.g., a user equipment, etc.), or a chip, chip system, or processor that supports the network device in implementing any one of the above methods, or a chip, chip system, or processor that supports the terminal in implementing any one of the above methods. The communication device 6100 may be configured to implement the methods described in the above method embodiments, and for details, reference may be made to the description of the above method embodiments.

As shown in FIG. 6a, the communication device 6100 includes one or more processors 6101. The processor 6101 may be a general-purpose processor or a special-purpose processor. For example, it may be a baseband processor or a central processing unit. The baseband processor is configured to process communication protocols and communication data, and the central processing unit is configured to control communication devices (such as base stations, baseband chips, terminals, terminal chips, DU or CU, etc.) to execute computer programs and process computer program data. Optionally, the communication device 6100 is used to perform any one of the above methods. Optionally, the one or more processors 6101 are configured to invoke instructions to cause the communication device 6100 to perform any one of the above methods.

In some embodiments, the communication device 6100 further includes one or more transceivers 6102. When the communication device 6100 includes one or more transceivers 6102, the transceivers 6102 perform at least one of the communication steps such as sending and/or receiving in the above methods, and the processor 6101 performs at least one of other steps. In optional embodiments, the transceiver may include a receiver and/or a transmitter, which may be separate or integrated together. Optionally, the terms such as transceiver, transceiver unit, transceiver machine, transceiver circuit, interface circuit, interface may be used interchangeably; the terms such as transmitter, transmitting unit, transmitter machine, transmitting circuit may be used interchangeably; and the terms such as receiver, receiving unit, receiver machine, receiving circuit may be used interchangeably.

In some embodiments, the communication device 6100 further includes one or more memories 6103 for storing data. Optionally, all or part of the one or more memories 6103 may be located outside the communication device 6100. In some embodiments, the communication device 6100 may further include one or more interface circuits 6104. Optionally, the interface circuit 6104 is connected to the memory 6103, and the interface circuit 6104 may be configured to receive data from the memory 6103 or other devices, and may be configured to send the data to the memory 6103 or other devices. For example, the interface circuit 6104 may read the data stored in the memory 6103 and send the data to the processor 6101.

The communication device 6100 described in the above embodiments may be a network device or a terminal, but the scope of the communication device 6100 described in the present disclosure is not limited thereto, and the structure of the communication device 6100 may not be limited by FIG. 6a. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 6b is a block diagram of a chip 6200 according to embodiments of the present disclosure. For the case where the communication device 6100 may be a chip or a chip system, reference may be made to the block diagram of the chip 6200 shown in FIG. 6b, which is not limited herein.

The chip 6200 includes one or more processors 6201. The chip 6200 is configured to perform any one of the above methods.

In some embodiments, the chip 6200 further includes one or more interface circuits 6202. Optionally, the terms such as interface circuit, interface, transceiver pin may be used interchangeably. In some embodiments, the chip 6200 further includes one or more memories 6203 for storing data. Optionally, all or part of the one or more memories 6203 may be located outside the chip 6200. Optionally, the interface circuit 6202 is connected to the memory 6203, and the interface circuit 6202 may be configured to receive data from the memory 6203 or other devices, and the interface circuit 6202 may be configured to send the data to the memory 6203 or other devices. For example, the interface circuit 6202 may read the data stored in the memory 6203 and send the data to the processor 6201.

In some embodiments, the interface circuit 6202 performs at least one of the communication steps such as sending and/or receiving in the above methods. Performing, by the interface circuit 6202, the communication steps such as sending and/or receiving in the above methods means, for example, that the interface circuit 6202 performs data exchange among the processor 6201, the chip 6200, the memory 6203, or a transceiver. In some embodiments, the processor 6201 performs at least one of other steps.

The modules and/or elements described in various embodiments such as virtual devices, physical devices, chips, etc. can be combined or separated arbitrarily according to the situation. Optionally, some or all of the steps can also be executed collaboratively by multiple modules and/or elements, without limitation here.

The present disclosure also provides a storage medium for storing instructions that, when executed on the communication device 6100, cause the communication device 6100 to perform any one of the above methods. Optionally, the storage medium is an electronic storage medium. Optionally, the storage medium is a computer-readable storage medium, which is not limited herein, and may also be a storage medium readable by other devices. Optionally, the storage medium may be a non-transitory storage medium, which is not limited herein, and may also be a transitory storage medium.

The present disclosure also provides a program product that, when executed by the communication device 6100, causes the communication device 6100 to perform any one of the above methods. Optionally, the program product is a computer program product.

The present disclosure also provides a computer program that, when running on a computer, causes the computer to perform any one of the above methods.

### Industrial Applicability

The terminal receives configuration information to learn the data processing mode indicated by the network device, so that when there is a change in the serving cell, the terminal can process the stored data or model based on the configuration information, saving storage space or facilitating subsequent reuse of data.

## Claims

1. A method for receiving configuration information, performed by a terminal, comprising:
receiving configuration information sent by a network device, wherein the configuration information indicates whether the terminal deletes a stored model or stored data in a case that a serving cell of the terminal changes from a first cell to a second cell, and the network device corresponds to the first cell or the second cell.

2. The method according to claim 1, wherein the configuration information comprises an area, and the method further comprises:
determining, by the terminal, whether to delete the model or the data according to whether the first cell or the second cell is in the area.

3. The method according to claim 2, wherein
the area is represented by a cell list, or by a geographic location range.

4. The method according to claim 2, further comprising:
in a case that the terminal leaves a radio resource control (RRC) connected state, storing the configuration information,
wherein the configuration information is sent via an RRC release message or an RRC reconfiguration message.

5. The method according to claim 1, wherein
the configuration information comprises an indicator bit to indicate whether to delete.

6. The method according to claim 1 or 5, wherein the configuration information comprises at least one of:
an artificial intelligence (AI) model;
an AI function;
an AI application scenario; or
an AI application condition;
wherein at least one of the AI model, the AI function, the AI application scenario, or the AI application condition has a corresponding relationship with the data.

7. The method according to claim 6, further comprising:
saving, by the terminal, the model or the data corresponding to the configuration information, or deleting, by the terminal, the model or the data corresponding to the configuration information.

8. The method according to claim 1, wherein the configuration information comprises at least one of:
an AI model supported by the first cell or the second cell;
an AI function supported by the first cell or the second cell; or
data collection information.

9. The method according to claim 8, further comprising:
in a case that the configuration information comprises the data collection information, saving, by the terminal, the model or the data; or
in a case that the configuration information comprises the supported AI model or the supported AI function, saving, by the terminal, the model or the data corresponding to the supported AI model or the supported AI function.

10. The method according to any one of claims 5 to 9, wherein
the configuration information is sent via system information (SI).

11. The method according to any one of claims 1 to 10, wherein
the data is used in a training stage of an AI model.

12. The method according to any one of claims 1 to 10, wherein
a change of the serving cell is determined according to a cell reselection or cell handover.

13. A method for sending configuration information, performed by a network device, comprising:
sending configuration information to a terminal, wherein the configuration information indicates whether the terminal deletes a stored model or stored data in a case that a serving cell of the terminal changes from a first cell to a second cell, and the network device corresponds to the first cell or the second cell.

14. The method according to claim 13, wherein
the configuration information comprises an area.

15. The method according to claim 14, wherein
the area is represented by a cell list, or by a geographic location range.

16. The method according to claim 14, wherein
the configuration information is sent via a radio resource control (RRC) release message or an RRC reconfiguration message.

17. The method according to claim 13, wherein
the configuration information comprises an indicator bit to indicate whether to delete.

18. The method according to claim 13 or 17, wherein the configuration information comprises at least one of:
an artificial intelligence (AI) model;
an AI function;
an AI application scenario; or
an AI application condition;
wherein at least one of the AI model, the AI function, the AI application scenario, or the AI application condition has a corresponding relationship with the data.

19. The method according to claim 13, wherein the configuration information comprises at least one of:
an AI model supported by the first cell or the second cell;
an AI function supported by the first cell or the second cell; or
data collection information.

20. The method according to any one of claims 17 to 19, wherein
the configuration information is sent via system information (SI).

21. The method according to any one of claims 13 to 20, wherein
the data is used in a training stage of an AI model.

22. The method according to any one of claims 13 to 20, wherein
a change of the serving cell is determined according to a cell reselection or cell handover.

23. A terminal, comprising:
a transceiver module, configured to receive configuration information sent by a network device, wherein the configuration information indicates whether the terminal deletes a stored model or stored data in a case that a serving cell of the terminal changes from a first cell to a second cell, and the network device corresponds to the first cell or the second cell.

24. A network device, comprising:
a transceiver module, configured to send configuration information to a terminal, wherein the configuration information indicates whether the terminal deletes a stored model or stored data in a case that a serving cell of the terminal changes from a first cell to a second cell, and the network device corresponds to the first cell or the second cell.

25. A terminal, comprising:
one or more processors;
wherein the terminal is configured to perform the method according to any one of claims 1 to 12.

26. A network device, comprising:
one or more processors;
wherein the network device is configured to perform the method according to any one of claims 13 to 22.

27. A communication system, comprising a terminal and a network device, wherein
the terminal is configured to implement the method according to any one of claims 1 to 12; and
the network device is configured to implement the method according to any one of claims 13 to 22.

28. A storage medium, storing instructions, wherein
when the instructions are running on a communication device, the communication device is caused to perform the method according to any one of claims 1 to 12 or any one of claims 13 to 22.
